# EUROPEAN PATENT SPECIFICATION

(11) **EP 3 801 146 B1**
(45) Date of publication and mention of the grant of the patent: **05.07.2023**
(21) Application number: 19814125.1
(22) Date of filing: 08.05.2019
(51) Int. Cl.: A47J 31/18, A47J 31/44

(54) **A COFFEE MACHINE**
KAFFEEMASCHINE
MACHINE À CAFÉ

(30) Priority: 05.06.2018 TR 201807946
(43) Date of publication of application: 14.04.2021
(73) Proprietor: Arçelik Anonim Sirketi, 34445 Istanbul (TR)
(72) Inventor: KARAAGAC, Emre, 34445 Istanbul (TR); AYAROGLU, Emre, 34445 Istanbul (TR); ALPTEKIN, Ahmet, 34445 Istanbul (TR); KUYUMCU, Arda, 34445 Istanbul (TR); COKER, Nazli Ecem, 34445 Istanbul (TR)
(86) International application number: PCT/TR2019/050309
(87) International publication number: WO 2019/236044

(56) References cited:
- WO-A1-2017/082841
- WO-A1-2017/164378
- WO-A1-2017/164378
- WO-A2-2005/122687
- WO-A2-2005/122687
- CN-U- 204 862 794
- CN-U- 204 995 268
- US-A- 4 386 556
- US-A1- 2007 289 913

## Description

The present invention relates to a coffee machine comprising cooking containers used in cooking Turkish coffee.

In coffee machines, particularly in Turkish coffee machines, a cooking container in which coffee-water mixture is prepared, is placed in a cooking slot. The cooking process is realized by heating the cooking container by means of a heater disposed on the base of the cooking slot. The cooking container may be aligned with the heater by placing the cooking container in the cooking slot so as to almost firm fittingly settle therein. In coffee machines without a cooking slot, alignment of the cooking container with the heater is left to the users who have to control each time whether the cooking container completely overlaps the heater. If alignment fails to be performed in full, the heater is unable to transmit sufficient heat to the cooking container, causing the coffee to be cooked inadequately. In addition, coffee may be overcooked at the portions where there is partial contact with the heater. Imperfect alignment of the cooking container also causes the sensor enabling detecting coffee level in the cooking container, to read erroneous measurements. Furthermore, in coffee machines without a cooking slot, problems may be experienced such as a cooking container being knocked over by a user.

State of the art international patent application no. WO2008052946 discloses a coffee machine having a cooking slot in which a cooking container is placed.

State of the art United States patent application no. US2016287007 discloses a coffee machine enabling a movable control head group to be maintained in a fixed position by means of a magnet.

State of the art international patent application no. WO8300548 discloses a coffee machine enabling alignment of a cooking container by means of a magnet provided on a resting surface on which the cooking container is placed.

State of the art international patent application no. WO0209562 discloses a coffee machine detecting orientation of a cooking container by means of two magnets.

State of the art international patent application no. WO2005122687 discloses an automatic coffee machine having to a cooking slot in which a cooking container is placed.

State of the art international patent application no. WO2017164378 discloses a milk preparation machine that enables milk preparation pot to be easily placed on the body.

The aim of the present invention is to realize a coffee machine in which a cooking container is prevented from being knocked over during the cooking process.

The coffee machine realized to achieve the aim of the present invention and disclosed in the first claim and the following claims, comprises a cavity provided on the base of a cooking container in which coffee and sugar is placed, and a projection provided on a resting surface on which the cooking container is placed, matching with the cavity when the cooking container is placed on the resting surface. In the coffee machine without a cooking slot, a cooking container being knocked/tilted over during the cooking process due to factors such as impacts is attempted to be prevented by a matching projection-cavity pair. The projection enters into the cavity, protecting the cooking container against lateral forces.

In an embodiment of the invention, the projection-cavity pair are positioned so as to be offset from the line passing through the centers of the resting surface and the cooking container. By this embodiment, the magnitude of the moment force applied by the projection-cavity pair with respect to the cooking container tilting axis forming due to the effect of lateral forces, is increased by extending the path of the moment force. The cooking container can thus stand without tilting over without being affected from larger lateral forces.

In another embodiment of the invention, the edges of the projection are curved. This embodiment enables the user not to strain in placing the cooking container on the resting surface, enabling the projection to easily match with the cavity by the cooking container base being passed over the projection.

According to the invention, the coffee machine comprises a magnet provided on the resting surface and a cooking container having a base partially made of ferromagnetic material. By this embodiment, the cooking container is protected against being tilted over by means of magnetic force in addition to the projection-cavity pair.

In another embodiment of the invention, the coffee machine comprises a first magnetic member provided on the handle of the cooking container, and a fastening piece having a second magnetic member disposed on the body so as to correspond to the first magnetic member when the cooking container is placed on the resting surface. By this embodiment, the cooking container is also connected/fastened from its handle portion to the coffee machine body by magnetic force, enabling protecting the cooking container against tilting over. In a version of this embodiment, the cooking container handle contacts the fastening piece. By this, in addition to magnetic force, the cooking container is supported against tilting over also from its handle portion. In another version of this embodiment, a seat is used, provided on the fastening piece, in which the cooking container handle fits/settles. The cooking container is thus firmly supported from its handle portion, avoiding likely circumstances in which the cooking container is tilted over expressly by a user impacting the handle.

In another embodiment of the invention, the fastening piece has a passive position in which it is concealed in the body, and an active position in which it supports the cooking container. A user can conceal the fastening piece inside the body when he/she is not using the cooking container or when he/she does not need the fastening piece.

In another embodiment of the invention, the coffee machine comprises a movement mechanism enabling the fastening piece to shift between its active and passive positions. By this embodiment, the fastening piece shifts between its two positions automatically or by being triggered by the user. In a version of this embodiment, a sensor is provided, enabling detecting whether the cooking container is placed on the resting surface, and the fastening piece shifts from passive position to active position upon detection of placement of the cooking container on the resting surface.

In the coffee machine of the invention, tilting over of the cooking container is prevented by the projection-cavity pair, improving convenience of use. In addition, the problem of the cooking container being not centered on the resting surface is solved by means of the projection-cavity pair.

The cooking container realized to achieve the aims of the present invention is illustrated in the accompanying drawings, wherein:

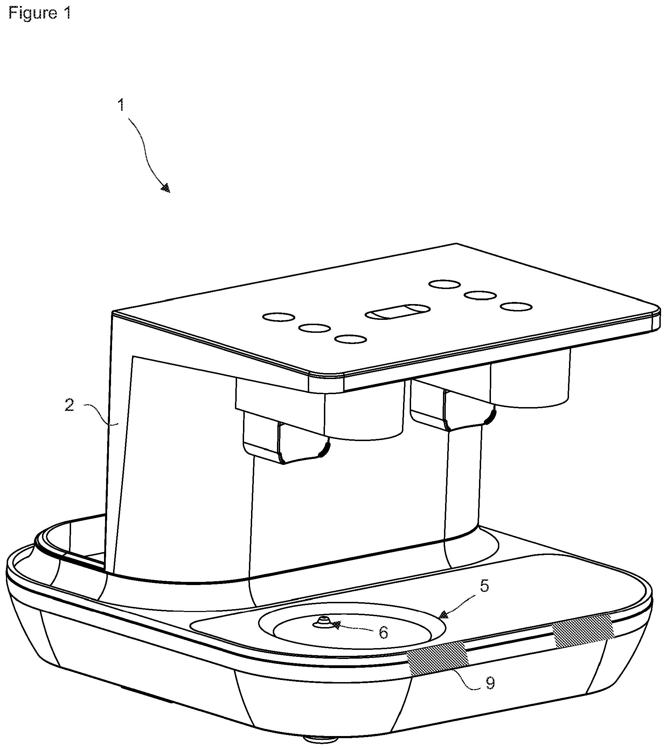

Figure 1 is a schematic side view of a coffee machine.

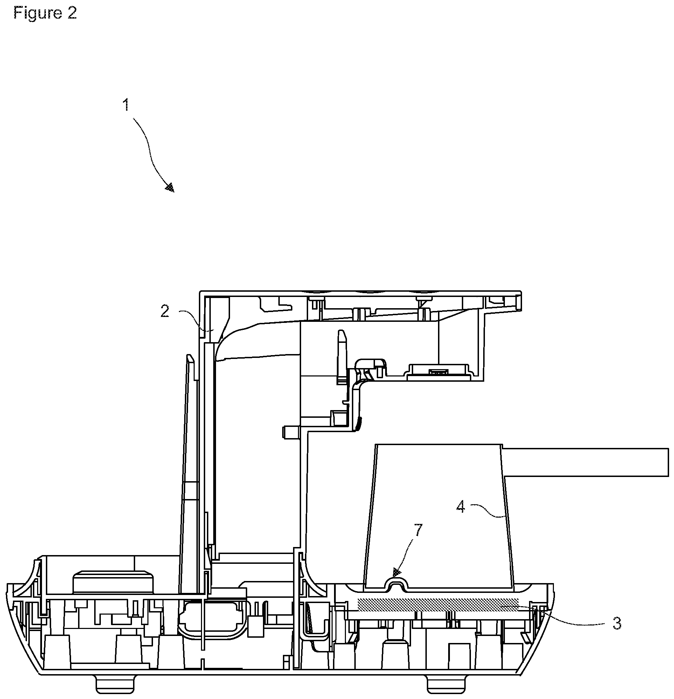

Figure 2 is a perspective view of a coffee machine.

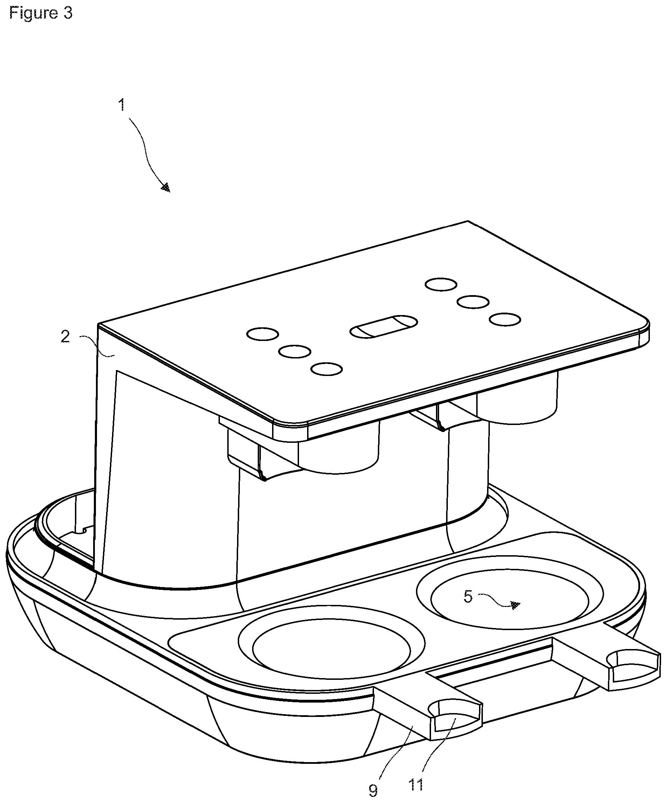

Figure 3 is a side sectional view of the coffee machine of the invention.

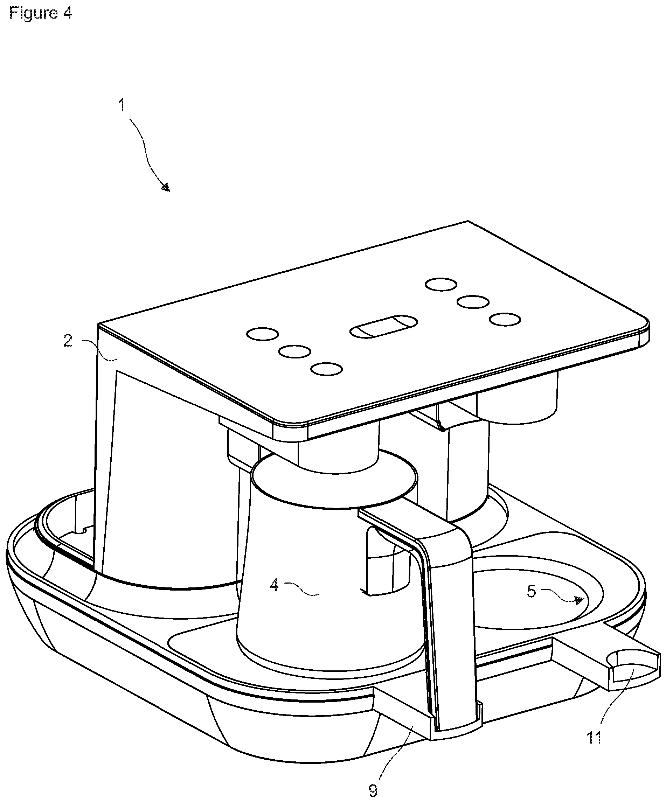

Figure 4 is a schematic view of the coffee machine in an embodiment of the invention, from above.

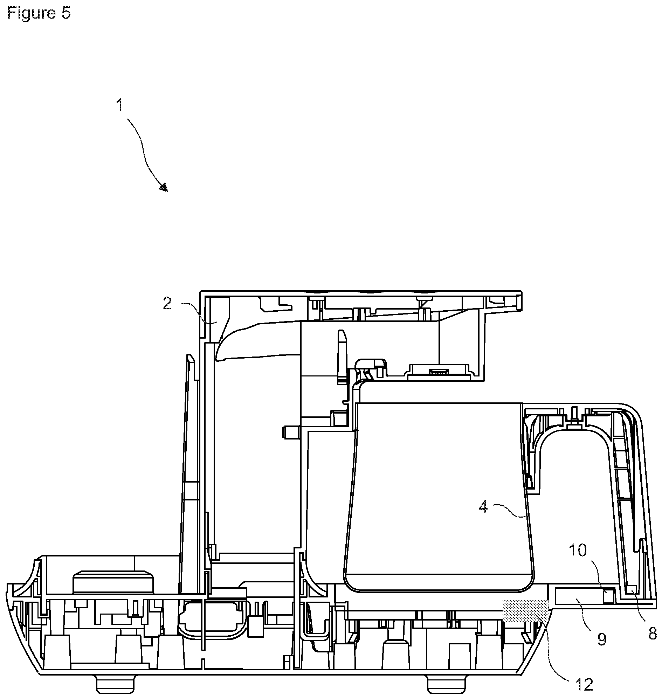

Figure 5 is a schematic view of the cross-section of the coffee machine in an embodiment of the invention.

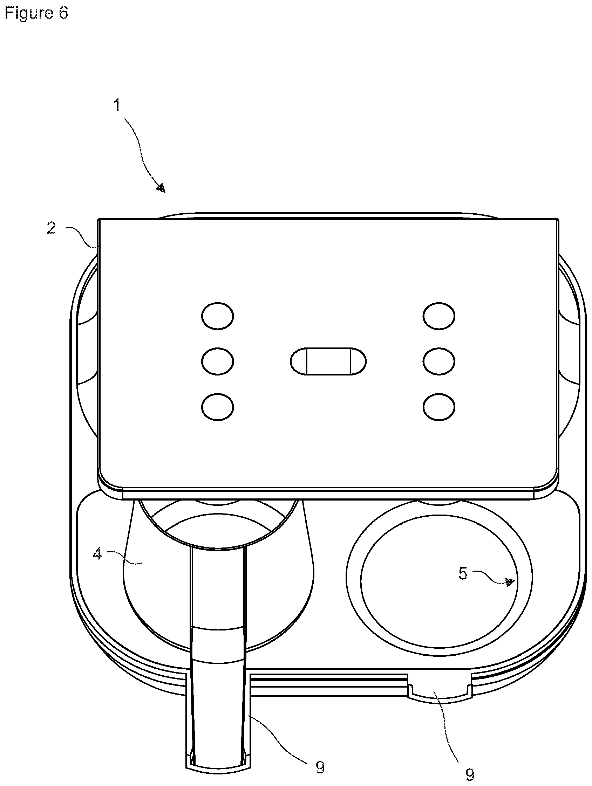

Figure 6 is another schematic view of the coffee machine in an embodiment of the invention, from above.

The elements in the figures are numbered individually and the correspondence of these numbers are given hereinafter.
1. Coffee machine
2. Body
3. Heater
4. Cooking container
5. Resting surface
6. Projection
7. Cavity
8. First magnetic member
9. Fastening piece
10. Second magnetic member
11. Seat
12. Movement mechanism

The coffee machine (1) comprises a body (2), a heater (3) provided in the body (2), realizing the cooking process, a coking container (4) in which the cooking process is performed, and a resting surface (5) provided on the heater (3), on which the cooking container (4) is placed. After being filled with materials such as coffee, water and sugar, the cooking container (4) is placed on the resting surface (5) and the coffee-water mixture therein is cooked by heating the cooking container (4) by means of the heater (3) disposed preferably below the resting surface (5).

The coffee machine (1) of the invention comprises a projection (6) provided on the resting surface (5) and a cavity (7) provided on the cooking container (4), configured to match with the projection (6). When the cooking container (4) is placed on the resting surface (5), the projection (6) enters into the cavity (7), enabling partial fastening of the cooking container (4) on the body (2). When the user is placing the cooking container (4), he/she passes the base of the cooking container (4) over the projection (6) and then coincides the cavity (7) on the projection (6) by sliding the cooking container (4) over the projection (6). The cooking container (4) is thus supported by the projection (6) - cavity (7) pair during the cooking process, preventing the cooking container (4) from tilting over.

In another embodiment of the invention, the projection (6) is positioned offset from the center of the resting surface (5) and the cavity (7) is positioned offset from the center of the base of the cooking container (4). The projection (6) - cavity (7) pair enabling the cooking container (4) to be aligned and preventing it from being tilted over, are positioned offset from the center of the resting surface (5) and the central line of the base of the cooking container (4), thereby preventing the cooking container (4) from tilting over by enabling it to be held in place by the moment force the projection (6) applies on the cooking container (4) via the cavity (7).

In another embodiment of the invention, the projection (6) has curved edges. This embodiment enables the cooking container (4) to be easily passed over the projection (6) when being placed on the resting surface (5), providing ease of use to the user.

According to the invention, the coffee machine (1) comprises a magnet (not shown in the figures) provided below the resting surface (5) and the cooking container has a base at least partially made of ferromagnetic material. This embodiment enables the user to easily place the cooking container (4) on the resting surface (5), and the generated magnetic force prevents tilting over of the cooking container (4) placed on the resting surface (5).

In another embodiment of the invention, the cooking container (4) comprises a first magnetic member (8) provided on its handle, and the coffee machine (1) comprises a fastening piece (9) provided on the body (2), in which is provided a second magnetic member (10) aligning with the first magnetic member (8) on the handle when the cooking container (4) is placed on the resting surface (5). In order to prevent tilting over of the cooking container (4), a fastening piece (9) is provided which is positioned on the body (2) so as to correspond to the lower portion of the cooking container (4) handle placed on the resting surface (5). In addition, a first magnet (8) is provided in the handle and a second magnet (10) is provided in the fastening piece (9). When the cooking container (4) is placed on the resting surface (5), the magnetic force generated between the first magnet (8) and the second magnet (10) prevents the cooking container (4) from tilting over.

In another embodiment of the invention, the fastening piece (9) contacts the lower portion of the handle. Besides the magnetic force enabled by the first and the second magnet pair (8 and 10), a physical force exerts a moment to the cooking container (4) due to contact between the fastening piece (9) and the cooking container (4) handle, preventing it from tilting over due to an impact.

In another embodiment of the invention, the coffee machine (1) comprises a seat (11) provided on the fastening piece (9), in which the handle fits. The seat (11) enables increasing the magnitude of the moment force applied on the cooking container (4), almost completely eliminating the risk of tilting over of the cooking container (4).

In another embodiment of the invention, the fastening piece (9) has a passive position in which it is concealed in the body (2), and an active position in which it extends outwards from the body (2) so as to rest below the handle. The capability to conceal the fastening piece (9) inside the body (2) when not needed, improves the aesthetic appearance of the coffee machine (1) and enhances its perceived quality. Moreover, the coffee machine (1) is prevented from tilting over when not in use due to a user colliding the fastening piece (9).

In another embodiment of the invention, the coffee machine (1) comprises a movement mechanism (12) having a motor (not shown in the figures) actuating the movement of the fastening piece (9) between passive position and active position. The user himself/herself does not have to shift the fastening piece (9) between passive position and active position thanks to the movement mechanism (12)

In another embodiment of the invention, the coffee machine (1) comprises a sensor (not shown in the figures) enabling detecting placement of the cooking container (4) on the resting surface (5) and the fastening piece (9) shifts from passive position to active position upon detection of placement of the cooking container (4). The fastening piece (9) is shifted from active position to passive position when the cooking container (4) is removed/lifted from the resting surface (5). In different embodiments of the invention, the sensor enabling detection of the cooking container (4) may be an induction coil sensing a ferromagnetic cooking container (4).

The present invention enables preventing a cooking container (4) from tilting over due to impacts in a Turkish coffee machine (1) without a cooking slot, primarily by means of a projection (6) provided on a resting surface (5) and a cavity (7) provided on the cooking container (4) base. The projection (6) applies a moment force against a lateral force acting on the cooking container (4) during the cooking process, in opposite direction via the cavity (7), preventing the cooking container (4) from tilting over.

## Claims

1. A coffee machine (1) **comprising** a body (2), a heater (3) provided in the body (2), realizing the cooking process, a cooking container (4) in which the cooking process is performed, and a resting surface (5) provided on the heater (3), on which the cooking container (4) is placed, a projection (6) provided on the resting surface (5) and a cavity (7) provided on the cooking container (4) and configured to match with the projection (6) **characterized by** a magnet provided below the resting surface (5) and by the cooking container (4) having a base at least partially made of ferromagnetic material.

2. A coffee machine (1) according to claim 1, **characterized by** the projection (6) positioned offset from the center of the resting surface (5) and by the cavity (7) positioned offset from the center of the base of the cooking container (4).

3. A coffee machine (1) according to claim 1 or 2, **characterized by** the projection (6) having curved edges.

4. A coffee machine (1) according to any one of the preceding claims, **characterized by** a first magnetic member (8) provided on the cooking container (4) handle, and a fastening piece (9) provided on the body (2), in which is provided a second magnetic member (10) aligning with the first magnetic member (8) on the handle when the cooking container (4) is placed on the resting surface (5).

5. A coffee machine (1) according to claim 4, **characterized by** the fastening piece (9) contacting the lower portion of the handle.

6. A coffee machine (1) according to claim 5, **characterized by** a seat (11) provided on the fastening piece (9), in which the handle fits.

7. A coffee machine (1) according to any one of the claims 4 to 6, **characterized by** the fastening piece (9) having a passive position in which it is concealed in the body (2), and an active position in which it extends outwards from the body (2) so as to rest below the handle.

8. A coffee machine (1) according to claim 7, **characterized by** a movement mechanism (12) having a motor actuating the movement of the fastening piece (9) between passive position and active position.

9. A coffee machine (1) according to claim 8, **characterized by** a sensor enabling detecting placement of the cooking container (4) on the resting surface (5) and by the fastening piece (9) shifting from passive position to active position upon detection of placement of the cooking container (4).

## Patentansprüche

1. Eine Kaffeemaschine (1) **umfasst** einen Körper (2), eine im Körper (2) vorgesehene Heizeinrichtung (3), die den Kochvorgang realisiert, einen Garbehälter (4), in dem der Garvorgang durchgeführt wird, und eine an der Heizeinrichtung (3) vorgesehene Auflagefläche (5), auf der der Garbehälter (4) abgestellt wird, einen an der Auflagefläche (5) vorgesehenen Vorsprung (6) und eine am Garbehälter (4) vorgesehene und passend zum Vorsprung (6) ausgebildete Vertiefung (7), **gekennzeichnet ist sie dadurch,** dass unterhalb der Auflagefläche (5) ein Magnet vorgesehen ist und der Garbehälter (4) einen zumindest teilweise aus ferromagnetischem Material bestehenden Boden aufweist.

2. Eine Kaffeemaschine (1), wie in Anspruch 1 aufgeführt, ist **dadurch gekennzeichnet, dass** der Vorsprung (6) gegenüber der Mitte der Auflagefläche (5) versetzt positioniert ist und die Vertiefung (7) gegenüber der Mitte des Bodens des Garbehälters (4) versetzt positioniert ist.

3. Eine Kaffeemaschine (1), wie in Anspruch 1 oder 2 aufgeführt, ist **dadurch gekennzeichnet, dass** der Vorsprung (6) gekrümmte Kanten aufweist.

4. Eine Kaffeemaschine (1), wie in einem der vorherigen Ansprüchen aufgeführt, ist **dadurch gekennzeichnet, dass** ein erstes magnetisches Element (8) einen am Garbehälter (4) vorgesehenen Griff aufweist, und ein am Körper (2) vorgesehenes Befestigungsstück (9), bei dem ein zweites magnetisches Element (10) vorgesehen ist, das mit dem ersten magnetischen Element (8) am Griff fluchtet, wenn der Kochbehälter (4) auf der Auflagefläche (5) platziert wird.

5. Eine Kaffeemaschine (1), wie in Anspruch 4 aufgeführt, **ist dadurch gekennzeichnet, dass** das Befestigungsstück (9) den unteren Abschnitt des Griffs berührt.

6. Eine Kaffeemaschine (1), wie in Anspruch 5 aufgeführt, **ist dadurch gekennzeichnet, dass** am Befestigungsstück (9) eine Aufnahme (11) vorgesehen ist, in die der Handgriff passt.

7. Eine Kaffeemaschine (1), wie in den Ansprüchen 4 bis 6 aufgeführt, ist **dadurch gekennzeichnet, dass** das Befestigungsstück (9) eine passive Position hat, in der es im Körper (2) verborgen ist, und eine aktive Position, in der es sich vom Körper (2) nach außen erstreckt, um unter dem Griff zu liegen.

8. Eine Kaffeemaschine (1), wie in Anspruch 7 aufgeführt, **ist dadurch gekennzeichnet, dass** ein Bewegungsmechanismus (12) einen Motor aufweist, der die Bewegung des Befestigungsstücks (9) zwischen passiver Position und aktiver Position antreibt.

9. Eine Kaffeemaschine (1), wie in Anspruch 8 aufgeführt, **ist dadurch gekennzeichnet, dass** ein Sensor das Erfassen des Aufstellens des Garbehälters (4) auf der Auflagefläche (5) und das Verschieben des Befestigungsstücks (9) von der passiven Position in die aktive Position bei Erfassung des Aufstellens des Garbehälters (4) ermöglicht.

## Revendications

1. Une machine à café (1) **comprenant** un corps (2), un élément chauffant (3) situé dans le corps (2), réalisant le processus de cuisson, un récipient de cuisson (4) dans lequel le processus de cuisson est réalisé, et une surface de repos (5) située sur l'élément chauffant (3), sur laquelle le récipient de cuisson (4) est placé, une saillie (6) située sur la surface de repos (5) et une cavité (7) située sur le récipient de cuisson (4) et configurée pour correspondre à la saillie (6) **caractérisée par** un aimant situé sous la surface de repos (5) et par le récipient de cuisson (4) dont la base est au moins partiellement constituée d'un matériau ferromagnétique.

2. Une machine à café (1) selon la déclaration 1, **caractérisée par** la saillie (6) positionnée de manière décalée par rapport au centre de la surface de repos (5) et par la cavité (7) positionnée de manière décalée par rapport au centre de la base du récipient de cuisson (4).

3. Une machine à café (1) selon la déclaration 1 ou 2, **caractérisée par le fait que** la saillie (6) a des bords incurvés.

4. Une machine à café (1) selon l'une quelconque des déclarations précédentes, **caractérisée par** un premier élément magnétique (8) prévu sur la poignée du récipient de cuisson (4), et une pièce de fixation (9) prévue sur le corps (2), dans laquelle est prévu un second élément magnétique (10) s'alignant avec le premier élément magnétique (8) sur la poignée lorsque le récipient de cuisson (4) est placé sur la surface de repos (5).

5. Une machine à café (1) selon la déclaration 4, **caractérisée par le fait que** la pièce de fixation (9) est en contact avec la partie inférieure de la poignée.

6. Une machine à café (1) selon la déclaration 5, **caractérisée par** un siège (11) prévu sur la pièce de fixation (9), dans lequel la poignée s'insère.

7. Une machine à café (1) selon l'une quelconque des déclarations 4 à 6, **caractérisée par le fait que** la pièce de fixation (9) a une position passive dans laquelle elle est dissimulée dans le corps (2), et une position active dans laquelle elle s'étend vers l'extérieur du corps (2) de manière à reposer sous la poignée.

8. Une machine à café (1) selon la déclaration 7, **caractérisée par** un mécanisme de mouvement (12) ayant un moteur actionnant le mouvement de la pièce de fixation (9) entre la position passive et la position active.

9. Une machine à café (1) selon la déclaration 8, **caractérisée par** un capteur permettant de détecter le placement du récipient de cuisson (4) sur la surface de repos (5) et par le passage de la pièce de fixation (9) de la position passive à la position active lors de la détection du placement du récipient de cuisson (4).
